# EUROPEAN PATENT SPECIFICATION

(11) **EP 3 066 786 B1**
(45) Date of publication and mention of the grant of the patent: **18.10.2017**
(21) Application number: 14809117.6
(22) Date of filing: 05.11.2014
(51) Int. Cl.: H04L 12/24, G06F 9/455

(54) **ENABLING LOAD BALANCING IN A NETWORK VIRTUALIZATION OVERLAY ARCHITECTURE**
LASTAUSGLEICHSERMÖGLICHUNG IN EINER NETZWERKVIRTUALISIERUNGS-OVERLAYARCHITEKTUR
ACTIVATION D'ÉQUILIBRAGE DE CHARGE DANS UNE ARCHITECTURE DE SUPERPOSITION DE VIRTUALISATION DE RÉSEAU

(30) Priority: 06.11.2013 US 201361900732 P
(43) Date of publication of application: 14.09.2016
(73) Proprietor: Telefonaktiebolaget LM Ericsson (publ), 164 83 Stockholm (SE)
(72) Inventor: QIANG, Zu, Kirkland, Québec H9H 4R4 (CA)
(74) Representative: Ericsson
(86) International application number: PCT/IB2014/065830
(87) International publication number: WO 2015/068118

(56) References cited:
- WU HUAWEI Q: "Proposed Control Plane requirements for Network Virtualization Overlays; draft-wu-nvo3-nve2nve-05.txt", PROPOSED CONTROL PLANE REQUIREMENTS FOR NETWORK VIRTUALIZATION OVERLAYS; DRAFT-WU-NVO3-NVE2NVE-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 23 April 2013 (2013-04-23), pages 1-24, XP015091353, [retrieved on 2013-04-23]
- BLACK J HUDSON BROCADE L KREEGER CISCO M LASSERRE ALCATEL-LUCENT T NARTEN D: "An Architecture for Overlay Networks (NVO3); draft-narten-nvo3-arch-00.txt", AN ARCHITECTURE FOR OVERLAY NETWORKS (NVO3); DRAFT-NARTEN-NVO3-ARCH-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 July 2013 (2013-07-08), pages 1-24, XP015094540, [retrieved on 2013-07-08]
- NARTEN T ET AL: "Problem Statement: Overlays for Network Virtualization; draft-ietf-nvo3-overlay-problem-statement- 04.txt", PROBLEM STATEMENT: OVERLAYS FOR NETWORK VIRTUALIZATION; DRAFT-IETF-NVO3-OVERLAY-PROBLEM-STATEMENT- 04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 31 July 2013 (2013-07-31), pages 1-24, XP015093750, [retrieved on 2013-07-31]
- KREEGER CISCO D DUTT CUMULUS NETWORKS T NARTEN D BLACK M SRIDHARAN MICROSOFT L: "Network Virtualization Overlay Control Protocol Requirements; draft-kreeger-nvo3-overlay-cp-04.txt", NETWORK VIRTUALIZATION OVERLAY CONTROL PROTOCOL REQUIREMENTS; DRAFT-KREEGER-NVO3-OVERLAY-CP-04.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 14 June 2013 (2013-06-14), pages 1-11, XP015090570, [retrieved on 2013-06-14]
- SCHOTT DEUTSCHE TELEKOM Q WU HUAWEI R: "Network Virtualization Overlay Architecture; draft-fw-nvo3-server2vcenter-01.txt", NETWORK VIRTUALIZATION OVERLAY ARCHITECTURE; DRAFT-FW-NVO3-SERVER2VCENTER-01.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 18 February 2013 (2013-02-18), pages 1-28, XP015090121, [retrieved on 2013-02-18]

## Description

### TECHNICAL FIELD

The present disclosure is generally related to network virtualization overlays, and is more particularly related to load balancing in a network virtualization overlay context.

### BACKGROUND

The networking industry is working on solutions and technologies for network virtualization. Network virtualization allows the deployment of "virtual networks," which are logical abstractions of physical networks. A virtual network can provide Layer 2 (L2) or Layer 3 (L3) network services to a set of "tenant systems." ("Layer 2" and "Layer 3" here refer to layers in the well-known Open Systems Interconnection (OSI) model.)

Virtual networks, which may also be referred to as Closed User Groups, are a key enabler for "virtual data centers," which provide virtualized computing, storage, and network services to a "tenant." A virtual data center is associated with a single tenant, thus isolating each tenant's computing and traffic, and can contain multiple virtual networks and tenant systems connected to these virtual networks.

Multiple standardization organizations are involved in the development of solutions for network virtualization, including groups known as OpenStack, ONF (open network forum), the Internet Engineering Task Force (IETF), etc. In the IETF, these activities are taking place in the NVO3 working group, which has defined a network virtualization overlay framework. An IETF document, "Framework for DC Network Virtualization," (referred to hereinafter as "NVO3 Framework"), describes this framework and may be found at http://tools.ietf.org/html/draft-ietf-nvo3-framework-03 (last accessed November 2014). Another IETF document, "An Architecture for Overlay Networks (NVO3)," (referred to hereinafter as "NVO3 Architecture"), provides a high-level overview architecture for building overlay networks in NVO3, and may be found at http://tools.ietf.org/html/draft-narten-nvo3-arch-00 (last access November 2014). This document generally adopts the terminology used and defined in the NVO3 Framework and NVO3 Architecture documents. However, it should be appreciated that the terminology may change as solutions are developed and deployed. Thus, the use herein of terms that are particular to the NVO Framework as currently defined should be understood as referring more generally to the functionality, apparatus, etc., that correspond to each term. Definitions for many of these terms may be found in the NVO3 Framework and NVO3 Architecture documents. It should be further appreciated that the techniques, apparatus, and solutions described herein are not necessarily limited to systems and/or solutions that comply with present or future IETF documents, but are more generally applicable to systems and solutions that have corresponding or similar components, functionalities, and features, to the extent that those components, functionalities, and features are relevant to the techniques and solutions described below.

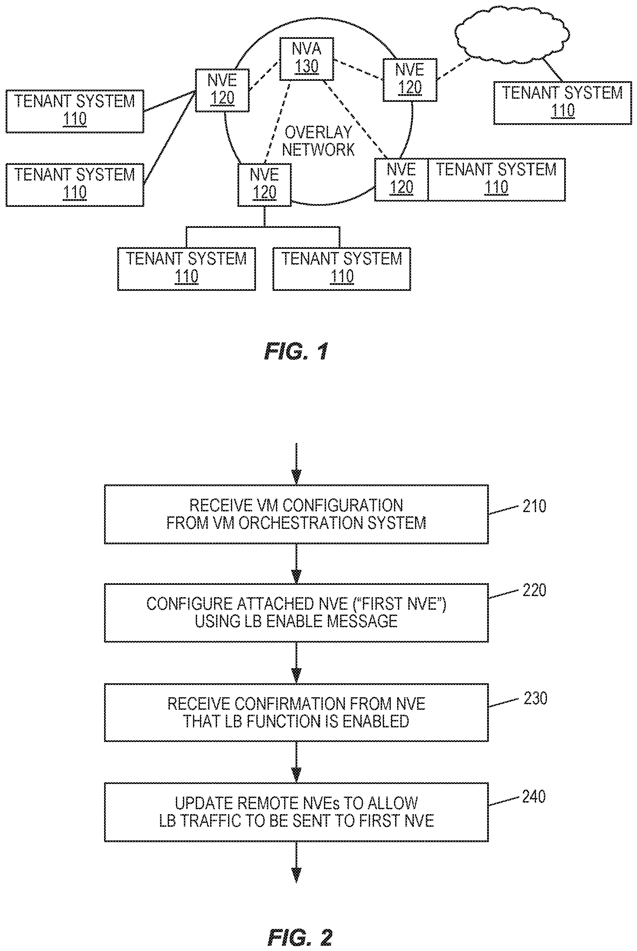

Figure 1 is a simplified illustration of the Network Virtualization Overlay architecture as conceived by the NVO3. Illustrated components include Tenant Systems 110, which are physical or virtual systems that can play the role of a host or a forwarding element, such as a router, switch, firewall, etc. A group of Tenant Systems 110 belong to a single tenant and are connected to one or more virtual networks of that tenant. Network Virtualization Edges (NVEs) 120 are network entities that sit at the edges of the underlay network and implement L2 and/or L3 network virtualization functions for the Tenant Systems 110. A Network Virtualization Authority 130 is an entity that provides address mapping to NVEs 120; this address mapping information is used by the NVEs 120 to properly forward traffic to other NVEs 120, on behalf of tenants. NVEs 120and NVAs 130 may each be implemented on one or several physical machines/processors.

The NVO3 working group (WG) was created early in 2012. The goal of the WG is to develop the multi-tenancy solutions for data centers (DCs), especially in the context of data centers supporting virtualized hosts known as virtual machines (VMs). An NVO3 solution (known here as a Data Center Virtual Private Network (DCVPN)) is a virtual private network (VPN) that is viable across a scaling range of a few thousand VMs to several million VMs, running on as many as one hundred thousand or more physical servers. NVO3 solutions have good scaling properties, from relatively small networks to networks with several million DCVPN endpoints and hundreds of thousands of DCVPNs within a single administrative domain. A DCVPN also supports VM migration between physical servers in a sub-second timeframe, and supports connectivity to traditional hosts.

The NVO3 WG will consider approaches to multi-tenancy that reside at the network layer, rather than using traditional isolation mechanisms that rely on the underlying layer 2 technology (e.g., VLANs). The NVO3 WG will determine the types of connectivity services that are needed by typical DC deployments (for example, IP and/or Ethernet).

Currently, the NVO3 WG is working on the DC framework, the requirements for both control plane protocol(s) and data plane encapsulation format(s), and a gap analysis of existing candidate mechanisms. In addition to functional and architectural requirements, the NVO3 WG will develop management, operational, maintenance, troubleshooting, security and OAM protocol requirements. The NVO3 WG will investigate the interconnection of the Data Center VPNs and their tenants with non-NVO3 IP network(s) to determine if any specific work is needed.

In this document, the IETF NVO3 framework is used as a base of telecom-cloud network discussion. However, the techniques described herein may be understood more generally, i.e., without the limitation of network virtualization overlay based on layer 3.

So far, the scope of the NVO3 WG efforts is limited to documenting a problem statement, the applicability, and an architectural framework for DCVPNs within a data center environment. NVO3 WG will develop requirements for both control plane protocol(s) and data plane encapsulation format(s) for intra-DC and inter-DC connectivity, as well as management, operational, maintenance, troubleshooting, security and OAM protocol requirements.

As noted above, in the NVO3 architecture, a Network Virtualization Authority (NVA) 130 is a network entity that provides reachability and forwarding information to NVEs 120. An NVA 130 is also known as a controller. A Tenant System can be attached to a Network Virtualization Edge (NVE)120, either locally or remotely. The NVE 120 may be capable of providing L2 and/or L3 service, where an L2 NVE 120 provides Ethernet LAN-like service and an L3 NVE 120 provides IP/VRF-like service.

The NVE 120 handles the network virtualization functions that allow for L2 and/or L3 tenant separation and for hiding tenant addressing information (MAC and IP addresses), tenant-related control plane activity and service contexts from the underlay nodes. NVE components may be used to provide different types of virtualized network services. The NVO3 architecture allows IP encapsulation or MPLS encapsulation. However, both L2 and L3 services can be supported.

According to the latest IETF discussions, it is recommended to have the NVE function embedded in a hypervisor, while co-locating the NVA with the VM orchestration. With these recommendations, it is not necessary to have NVE-NVE control signaling. The address mapping table used by the NVE 120 can be configured by the NVA 130. Goals of designing a NVA-NVE control protocol are to eliminate user plane flooding and to avoid an NVE-NVE control protocol. The NVEs 120 can use any encapsulation solution for the data plane tunneling.

As discussed above, an NVE 120 is the network entity that sits at the edge of an underlay network and implements L2 and/or L3 network virtualization functions. The network-facing side of the NVE 120 uses the underlying L3 network to tunnel frames to and from other NVEs 120. The tenant-facing side of the NVE sends and receives Ethernet frames to and from individual Tenant Systems 110. An NVE 120 can be implemented as part of a virtual switch within a hypervisor, a physical switch or router, a Network Service Appliance, or can be split across multiple devices.

A Virtual Network (VN) is a logical abstraction of a physical network that provides L2 or L3 network services to a set of Tenant Systems. A VN is also known as a Closed User Group (CUG). Virtual Network Instance (VNI) is a specific instance of a VN.
Prior art is known from WU HUAWEI Q: "Proposed Control Plane requirements for Network Virtualization Overlays; draft-wu-nvo3-nve2nve-05.txt", Internet Engineering Task Force, IETF, Standard Working Draft, Internet Society, ISOC, 23 April 2013 (2013-04-23), pages 1-24.

While progress has been made in the NVO3 WG, detailed solutions for network virtualization overlays are needed. In particular, solutions that enable load balancing are needed.

### SUMMARY

According to several of the techniques disclosed herein and detailed below, a load balancing (LB) function is integrated into an NVE function. This LB function, residing in the NVE, is configured by an NVA over a new NVA-NVE protocol. The NVA can thus enable or disable the LB function for a given VN in a specific NVE. The NVE shall be configured with a LB address, which is either an IP address or a MAC address, for LB traffic distribution. Different LB factors, LB algorithm, etc., can be applied, based on the needs.

When the LB function is enabled or disabled in the NVE, the NVA shall update the inner-outer address mapping in the remote NVEs in order to allow the LB traffic to be sent to the LB-enabled NVE. Upon VM mobility, the NVA shall disable the LB function in the old NVE and enable the LB function in the new NVE. The NVA shall also update the remote NVE to redirect LB traffic to the right NVE.

Supporting an integrated LB function in the NVO3 architecture allows the NVE to provide more flexibility when configuring a NVO3 network. When detecting a duplicated address error, the NVE will not be confused, as it has the knowledge why the duplicated addresses are configured.

Several of the methods disclosed herein are suitable for implementation in an NVA in a network virtualization overlay. According to one example method, the NVA receives Virtual Machine (VM) configuration information from a VM orchestration system. Based on this information, the NVA configures an attached NVE (a "first" NVE) to enable Load Balancing (LB), by sending an LB enable message to the NVE. The NVA subsequently receives a confirmation message from the NVE, indicating that the LB function in the NVE is enabled. The NVA then updates remote NVEs, allowing LB traffic to be sent to the first NVE.

According to another method, an NVA in a network virtualization overlay determines that the LB function should be disabled in a first NVE. The NVA configures the NVE to disable the LB function, by sending an LB disable message to the NVE. After receiving confirmation from the NVE that the LB function is disabled, the NVA updates remote NVEs to disallow sending of LB traffic to the first NVE.

According to another method, an NVA in a network virtualization overlay determines, for example, that VM mobility is needed. The NVA configures an "old" NVE, which is currently handling a LB function, to disable the LB function, by sending a LB disable message to the old NVE. After receiving confirmation from the old NVE, the NVA configures a "new" NVE to enable the LB function, by sending an LB enable message to the new NVE. After receiving confirmation from the new NVE that the LB function is enabled, the NVA updates remote NVAs to redirect LB traffic to the new NVE.

Corresponding methods are carried out in NVEs configured according to the presently disclosed techniques. In an example method, an NVE in a network virtualization overlay receives an LB enable message from an NVA. The NVE enables the LB function, and confirms this enabling by sending a confirmation message to the NVA. Subsequently, the NVE receives incoming packets with a LB address (e.g., an LB IP address). The NVE uses the LB address to find the appropriate virtual network (VN) context, from which it determines a specified LB algorithm. The NVE obtains a VM MAC address for each packet, based on the LB algorithm, and forwards the packets according to the VM MAC addresses.

Variants of these methods, as well as corresponding apparatus, are disclosed in detail in the discussion that follows.

### DESCRIPTION

In the following, specific details of particular embodiments of the presently disclosed techniques and apparatus are set forth for purposes of explanation and not limitation. It will be appreciated by those skilled in the art that other embodiments may be employed apart from these specific details. Furthermore, in some instances detailed descriptions of well-known methods, nodes, interfaces, circuits, and devices are omitted so as not to obscure the description with unnecessary detail. Those skilled in the art will appreciate that the functions described may be implemented in one or in several nodes.

Some or all of the functions described may be implemented using hardware circuitry, such as analog and/or discrete logic gates interconnected to perform a specialized function, ASICs, PLAs, etc. Likewise, some or all of the functions may be implemented using software programs and data in conjunction with one or more digital microprocessors or general purpose computers. Moreover, the technology can additionally be considered to be embodied entirely within any form of computer-readable memory, including non-transitory embodiments such as solid-state memory, magnetic disk, or optical disk containing an appropriate set of computer instructions that would cause a processor to carry out the techniques described herein.

Hardware implementations may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors or one or more controllers, and the terms computer, processor, and controller may be employed interchangeably. When provided by a computer, processor, or controller, the functions may be provided by a single dedicated computer or processor or controller, by a single shared computer or processor or controller, or by a plurality of individual computers or processors or controllers, some of which may be shared or distributed. Moreover, the term "processor" or "controller" also refers to other hardware capable of performing such functions and/or executing software, such as the example hardware recited above.

References throughout the specification to "one embodiment" or "an embodiment" mean that a particular feature, structure, or characteristic described in connection with an embodiment is included in at least one embodiment of the present invention. Thus, the appearance of the phrases "in one embodiment" or "in an embodiment" in various places throughout the specification are not necessarily all referring to the same embodiment. Further, the particular features, structures or characteristics may be combined in any suitable manner in one or more embodiments.

With the NVO3 architecture described in the NVO3 Architecture document discussed above, a NVA-NVE control plane protocol is needed for NVE configuration and notifications. Another Hypervisor-NVE control plane protocol is also needed for notifications of VN connection and disconnection, as well as for notifications of virtual network interface card (vNIC) association and disassociation.

According to ongoing IETF discussions, it has also been identified that error handling shall also be supported by the NVE, such error handling to include detection of duplicated address detection. There are possibilities that multiple tenant systems of a given virtual network have been misconfigured with the same address by the VM orchestration system. If the two tenant systems have been located in different hypervisors under the same NVE, the hypervisors may not be able to detect this error. As a result, the vNIC association notifications will be sent to the attached NVE. When the NVE receives the vNIC association notifications, it shall verify the received information with the vNIC table of the VN context. If the same vNIC address is found, the misconfiguration can be detected.

However there is at least one exception case that causes a problem with this approach. A load balance (LB) function may be enabled in the virtual network, where the same address is configured for multiple network devices or VMs on purpose. In a cloud network, the LB function is normally provided by the VM function, e.g., a VM running an LB function to distribute the data traffic to different network servers. Alternatively, the LB function can be supported at the data center (DC) fabric network. In either case, it is not possible for the NVE to detect whether the duplicated address is by misconfiguration or by LB function.

Other problems may arise from providing the LB function in a VM or at the DC fabric network. For instance, the DC fabric network can only apply the LB function on the tunneled VM data traffic, or on the un-tunneled traffic using a specific network device. Performing the LB on the un-tunneled packets using a VM or network device will reduce the NOV3 network performance. Performing the LB on the tunneled packets only provides LB between NVEs. It cannot support LB on the tenant system data traffic in many cases, e.g., when data traffic is encrypted. Still further, there is not enough flexibility when configuring the network, since the LB function does not fit into the NVO3 architecture.

The techniques, apparatus, and solutions described herein allow the NVE to have a load balance function enabled in an NVO3 architecture. According to several of these techniques, the LB function is integrated into the NVE function. The LB function, residing in the NVE, shall be configured by the NVA over a new NVA-NVE protocol. The NVA can thus enable or disable the LB function for a given VN in a specific NVE. The NVE shall be configured with a LB address, which is either an IP address or a MAC address, for LB traffic distribution. Different LB factors, LB algorithms, etc., can be applied, based on the needs.

When the LB function is enabled or disabled in the NVE, the NVA shall update the inner-outer address mapping in the remote NVEs in order to allow the LB traffic to be sent to the LB enabled NVE. Upon VM mobility, the NVA shall disable the LB function in the old NVE and enable the LB function in the new NVE. The NVA shall also update the remote NVE to redirect LB traffic to the right NVE.

Supporting an integrated LB function in the NVO3 architecture allows the NVE to provide more flexibility when configuring a NVO3 network. This approach allows the LB function to be enabled or disabled by the NVA in an NVO3 architecture. The integrated LB function allows the NVE to handle the LB function more easily. Furthermore, when detecting a duplicated address error, the NVE will not be confused, as it has the knowledge as to why the duplicated addresses are configured, and can properly report misconfigured duplicated address errors to the NVA.

### Enabling / Disabling procedures

Following are specific procedures for enabling and disabling an LB function in an NVE configured according to the presently disclosed techniques.

### Enabling the LB function in the NVE

Following are assumptions and steps for enabling the LB function in a NVO3 network that includes NVEs and an NVA configured according to the presently disclosed technique. Reference is made to Figure 2, which illustrates a corresponding procedure from the point of view of the NVA.

It is assumed that the Hypervisor/vSwitch is always configured by the VM Orchestration Systems. The VM Orchestration Systems configures the Hypervisor with two or more VMs with the same address. Thus, the NVA receives the VMs' configuration from VM Orchestration Systems, as shown at block 210.

As shown at block 220, the NVA configures the attached NVE with the new LB enable message via the NVA-NVE control plane protocol. In response, the NVE confirms to the NVA that the configuration is accepted and the LB function is enabled accordingly. Thus, as shown at block 230, the NVA receives, from the NVE, confirmation that the LB function is enabled. Subsequently, the NVA updates the remote NVEs to allow the LB traffic to be sent to the LB enabled NVE, as shown at block 240.

### Disabling the LB function in the NVE

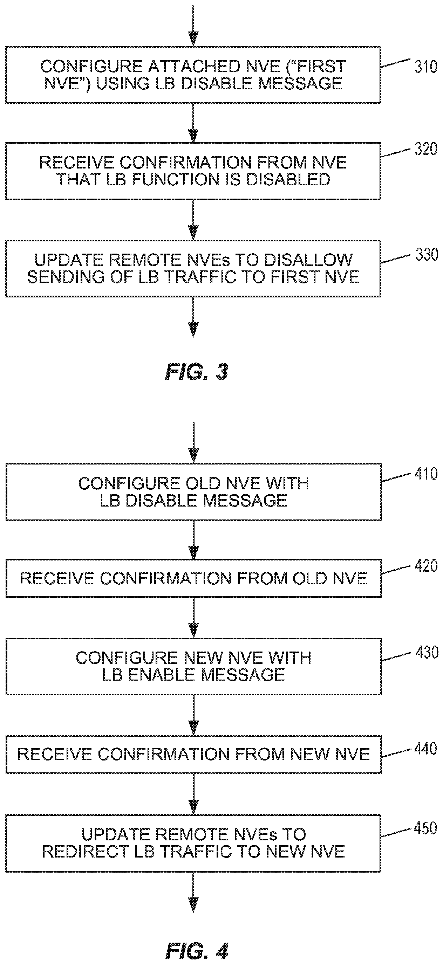

Following are assumptions and steps for disabling the LB function in a NVO3 network that includes NVEs and an NVA configured according to the presently disclosed techniques. Reference is made to Figure 3, which illustrates a corresponding procedure from the point of view of the NVA.

As a starting point for the method illustrated in Figure 3, it is assumed that the LB function has previously been enabled in a first NVE. At any time, the NVA may want to disable the LB function in that NVE. This can be due to the hypervisor being shutdown, for example, or due to that the VM is moved to another hypervisor under a different NVE.

As shown at block 310, the NVA configures the attached NVE (the first NVE), using a new LB disable message via the NVA-NVE control plane protocol. As shown at block 320, the NVE confirms to the NVA that the indicated LB is disabled accordingly. As shown at block 330, the NVE updates the remote NVEs to disallow the LB traffic to be sent to the NVE.

### Re-enabling the LB function at VM mobility

Following are assumptions and steps for re-enabling the LB function at VM mobility in a NVO3 network that includes NVEs and an NVA configured according to the presently disclosed techniques. Reference is made to Figure 4, which illustrates a corresponding procedure from the point of view of the NVA.

As a starting point for the method illustrated in Figure 4, it is assumed that the LB function has previously been enabled in a first NVE. Then, it is assumed (for example), that the corresponding VM is moved to another hypervisor, under a different NVE, i.e., a second NVE.

As shown at block 410, the NVA configures the first NVE (the "old" NVE), using a new LB disable message via the NVA-NVE control plane protocol. As shown at block 420, the first NVE confirms to the NVA that the indicated LB is disabled accordingly.

As shown at block 430, the NVA configures the second NVE, i.e., the "new" NVE, with an LB enable message, via the NVA-NVE control plane protocol. The new NVE confirms to the NVA that the configuration is accepted and the LB function is enabled accordingly, as shown at block 440. The NVA updates the remote NVEs to redirect LB traffic to the new NVE, as shown at block 450.

### New NVA-NVE protocol for LB enabling / disabling

Following are example messages that may be included in a new NVA-NVE protocol for LB enabling and disabling.

### NVA-to-NVE configuration messages

An NVA-to-NVE configuration message contains the VN context info, such as VN name, VN ID, etc. It also contains a LB ID, a LB enabling/disabling indicator, the LB address, the associated vNIC addresses for the LB function, and LB function parameters. These parameters are shown in Table 1, below:

**Table 1**

| **Parameters** | **Descriptions** |
|---|---|
| VN identity | The VN identity contains the VN name and/or VN ID |
| VN profile | The VN context, which defines, for example, quality-of-service (QoS) requirements, security policies, etc. |
| LB ID | The LB ID is a unique number for a given VN. Using a unique number for the subsequent communications can optimize the communication between the NVA and NVE. |
| LB indicator | The LB enabling / disabling indicator is used to inform the NVE that LB function shall be enabled or disabled in this NVE for the given VN. |
| LB address | The LB address is used as the destination address of any incoming traffic to which the LB function shall be applied |
| Associated vNIC addresses list | The associated vNIC addresses for the LB function are the VMs' addresses where the LB-applied traffic shall be forwarded. |
| LB function parameters | The LB function parameters include any other LB related information, such as LB factors, a LB algorithm, etc. |

### NVE-to-NVA confirmation message

The NVE-to-NVA confirmation message shall contain a LB enabling / disabling confirmation indicator with the associated VN name and LB ID. Alternatively, it may contain a LB enabling / disabling declare indicator with an error code. These parameters are shown in Table 2, below:

**Table 2**

| **Parameters** | **Descriptions** |
|---|---|
| VN identity | The VN identity contains the VN name and/or VN ID |
| LB ID | The LB ID is a unique number for a given VN. It is the same ID received from the NVA in the message enabling or disabling the LB function. |
| LB response indicator | The LB response indicator may include one of the following: |
| | - LB is enabled |
| | - LB is disabled |
| | - LB enabling rejected |
| | - LB disabling rejected |
| Error code | The error code is included when the request is rejected. It gives the reason when the request is rejected. |

### The support of LB function in NVE

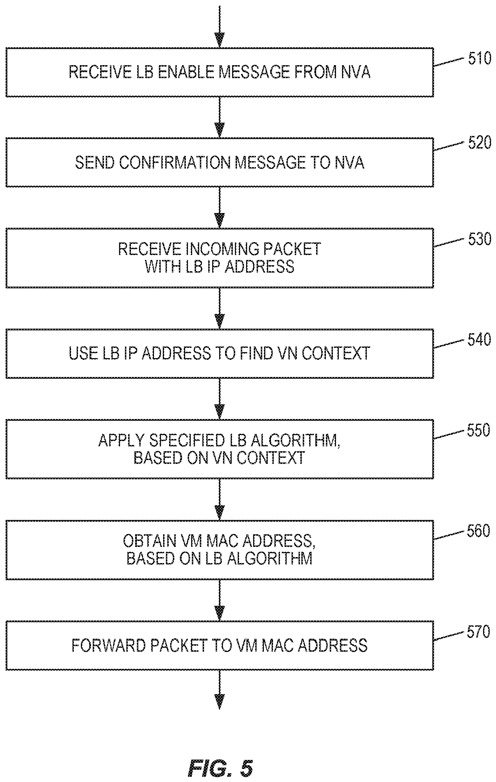

Figure 5 illustrates the support of the LB function in an NVE configured according to the presently disclosed techniques. It should be appreciated that the illustrated process may be applied to either L3 services or L2 services, as detailed below. The illustrated method is first discussed for a system that applies the method to L3 services; modifications applicable to L2 services are then discussed.

As shown at block 510, the illustrated method begins with the receiving, in the NVE, of an LB enable message from the NVA. A confirmation message is then sent to the NVA, as shown at block 520.

When Layer 3 service is supported in the NVE, the LB address (included in the LB enable message, in some embodiments) will be an IP address. This is the destination IP address to which the incoming traffic shall be sent. When the incoming packets with that LB IP address are received, as shown at block 530, the NVE uses the LB IP address to find out the VN context, as shown at block 540. The NVE then applies an LB algorithm based on certain LB factors, as shown at block 550. For instance, the LB factors may specify whether the LB algorithm uses the source IP address. The LB algorithm and/or the LB factors may be specified in the LB enable message, for example.

The next step is based on the output of the LB algorithm. As shown at block 560, the NVE obtains the VM MAC address where the packets shall be forwarded. The VM MAC address is configured by the NVA as the associated vNIC addresses, e.g., in the LB enable message. The last step, as shown at block 570, is to perform L2 forwarding with the VM address as the destination MAC address of the L2 packet.

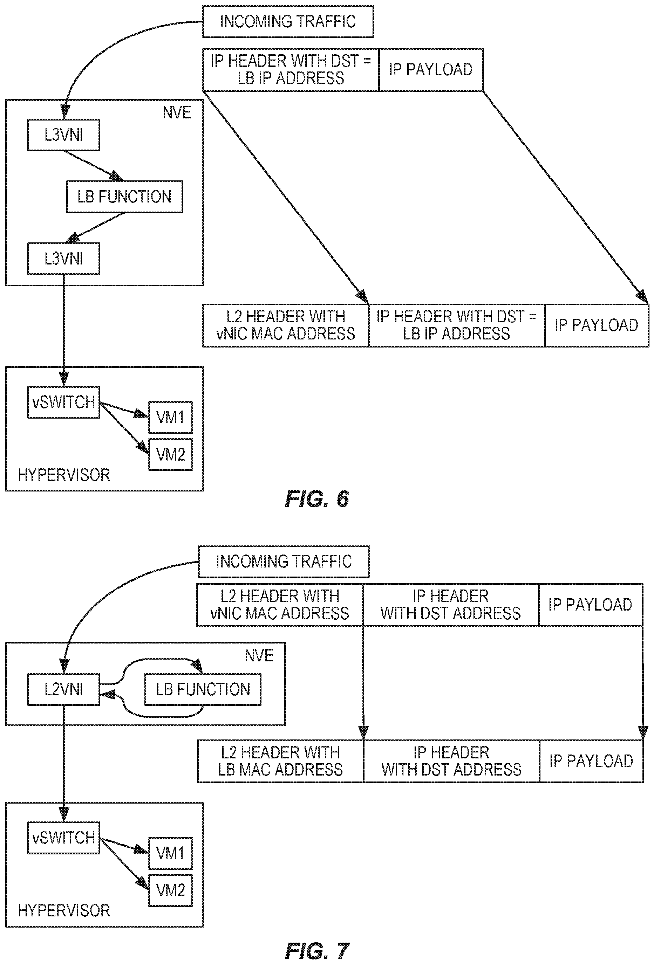

Figure 6 illustrates an example of how the data packet is handled in an LB-enabled NVE 610, when L3 service is supported. As seen at the top of the figure, an incoming packet has an IP header with a destination LB IP address and an IP payload. Based on the LB IP address, the NVE 610 determines VN context and the appropriate vNIC MAC addresses for performing the LB function, and adds a L2 header with one of the vNIC MAC addresses to the packet, according to the applicable LB algorithm. The vSwitch in Hypervisor 620 then forwards the packet according to the vNIC MAC address.

The method shown in Figure 5 is performed slightly differently if Layer 2 service is supported in the NVE. In this case, the NVE shall have a MAC address configured as the LB address. This is the destination address where the incoming traffic shall be sent to. When the incoming packets with the LB MAC address are received, as shown in block 530 of Figure 5, the NVE shall use the LB MAC address to find out the VN context, as shown at block 540.

Then, the NVE shall apply the specified LB algorithm based on the specified LB factor, as shown at block 550. For instance, the LB algorithm may use the last digit of the user ID. In that case, the NVE shall open the packet until the Layer 4, in order to perform the LB policies.

The next step is based on the output of the LB algorithm. As shown at block 560, the NVE obtains the VM address where the packets shall be forwarded. The VM address is configured by the NVA as the associated vNIC addresses. Before forwarding the packets to the VM, as shown at block 570, the destination address of the L2 packet header shall be replaced with the VM address.

Figure 7 illustrates an example how the data packet is handled in an LB-enabled NVE 710, when L2 service is supported. As seen at the top of the figure, an incoming packet has an IP header with a destination IP address, an IP payload, and an L2 header with a vNIC MAC address. The vNIC MAC address is the LB MAC address. Thus, the NVE 710 determines VN context and the appropriate vNIC MAC addresses for performing the LB function, and substitutes a L2 header with one of the vNIC MAC addresses for the existing L2 header on the packet, according to the applicable LB algorithm. The vSwitch in Hypervisor 620 then forwards the packet according to the vNIC MAC address.

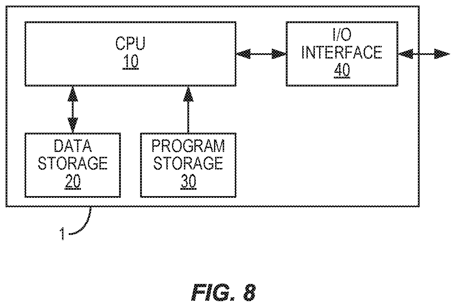

The various techniques and processes described above are implemented in NVEs and/or NVAs, or in their equivalents in other network virtualization overlays. It will be appreciated that NVEs and NVAs are logical entities, which may be implemented on one or more processors in one or more physical devices. Figure 8 is a schematic illustration of a node 1 in which a method embodying any of the presently described techniques can be implemented. For any given method or technique, the node illustrated in Figure 8 may correspond to a NVE or NVA, for example. It should be appreciated that any one or more of the components illustrated in Figure 8 may be made up of several underlying hardware devices, which may or may not be collocated in a single physical apparatus.

A computer program for controlling the node 1 to carry out a method embodying any of the presently disclosed techniques is stored in a program storage 30, which comprises one or several memory devices. Data used during the performance of a method embodying the present invention is stored in a data storage 20, which also comprises one or more memory devices. During performance of a method embodying the present invention, program steps are fetched from the program storage 30 and executed by a Central Processing Unit (CPU) 10, retrieving data as required from the data storage 20. Output information resulting from performance of a method embodying the present invention can be stored back in the data storage 20, or sent to an Input/Output (I/O) interface 40, which includes a network interface for sending and receiving data to and from other network nodes. The CPU 10 and its associated data storage 20 and program storage 20 may collectively be referred to as a "processing circuit." It will be appreciated that variations of this processing circuit are possible, including circuits include one or more of various types of programmable circuit elements, e.g., microprocessors, microcontrollers, digital signal processors, field-programmable application-specific integrated circuits, and the like, as well as processing circuits where all or part of the processing functionality described herein is performed using dedicated digital logic.

Accordingly, in various embodiments of the invention, processing circuits, such as the CPU 10, data storage 20, and program storage 30 in Figure 8, are configured to carry out one or more of the techniques described in detail above where the processing circuits are configured, e.g., with appropriate program code stored in memory circuits, to carry out the operations described above. While some of these embodiments are based on a programmed microprocessor or other programmed processing element, it will be appreciated, as noted above, that not all of the steps of these techniques are necessarily performed in a single microprocessor or even in a single module. It will be further appreciated that embodiments of the presently disclosed techniques further include computer program products for application in an appropriate network node.

Various aspects of the above-described embodiments can also be understood as being carried out by functional "modules," or "units," which may be program instructions executing on an appropriate processor circuit, hard-coded digital circuitry and/or analog circuitry, or appropriate combinations thereof. Thus, for example, an example NVA node adapted to provide reachability and forwarding information to one or more NVE nodes in a network employing a NVO, wherein each NVE node implements Layer 2 and/or Layer 3 network virtualization functions for one or more tenant system elements, may comprise functional modules corresponding to the methods and functionality described above, including a receiving unit for receiving VM configuration information for one or more VMs, via a network interface circuit, a configuring unit for configuring at least a first NVE to enable load balancing by sending a LB enable message to the first NVE node via the network interface circuit, and an updating unit for updating configuration information for one or more remote NVEs to allow load balancing traffic for the one or more VMs to be sent to the first NVE node.

Similarly, an example NVE node may be understood to comprise a receiving unit for receiving, via the network interface circuit, a LB enable message from a NVA node that provides reachability and forwarding information to the NVE node, an enabling unit for enabling a load balancing function, in response to the LB enable message; and a forwarding unit for forwarding subsequent load balancing traffic to one or more VMs, using the enabled load balancing function.

Examples of several embodiments of the present techniques have been described in detail above, with reference to the attached illustrations of specific embodiments. Because it is not possible, of course, to describe every conceivable combination of components or techniques, those skilled in the art will appreciate that the present invention can be implemented in other ways than those specifically set forth herein, without departing from essential characteristics of the invention. The present embodiments are thus to be considered in all respects as illustrative and not restrictive.

**ABBREVIATIONS**

| Abbreviation | Explanation |
|---|---|
| DC | Data Center |
| IANA | Internet Assigned Numbers Authority |
| NVA | Network Virtualization Authority |
| NVE | Network Virtualization Edge |
| NVO | Network Virtualization Overlay |
| VAP | Virtual Access Point |
| VM | Virtual Machine |
| VN | Virtual Network |
| VNC | Virtual Network Context |
| VNI | Virtual Network Instance |
| vNIC | Virtual Network Interface Card |

## Claims

1. A method in a Network Virtualization Authority, NVA, node that provides reachability and forwarding information to one or more Network Virtualization Edge, NVE, nodes in a network employing a Network Virtualization Overlay, NVO, wherein each NVE node implements Layer 2 and/or Layer 3 network virtualization functions for one or more tenant system elements, the method comprising:
receiving (210) virtual machine, VM, configuration information for one or more VMs; and the method being **characterized by**:
configuring (220) at least a first NVE to enable load balancing, LB, by sending a LB enable message to the first NVE node; and
updating (240) configuration information for one or more remote NVEs to allow load balancing traffic for the one or more VMs to be sent to the first NVE node.

2. The method of claim 1, wherein the method further comprises receiving (230) confirmation, from the first NVE node, that a load balancing function is enabled.

3. The method of claim 1 or 2, further comprising:
determining that LB should be disabled in the first NVE node;
sending (310,410) a LB disable message to the first NVE node; and
updating (330, 450) configuration information for one or more remote NVEs to prevent load balancing traffic for the one or more VMs from being sent to the first NVE node; and wherein, optionally,
the method further comprises receiving (320, 420) confirmation, from the first NVE node, that the load balancing function has been disabled.

4. The method of claim 3, wherein the method further comprises:
configuring (430) a second NVE node to enable load balancing, LB, by sending a LB enable message to the second NVE node; and
updating (450) configuration information for one or more remote NVEs to allow load balancing traffic for the one or more VMs to be sent to the second NVE node; and wherein, optionally,
the method further comprises receiving (440) confirmation, from the second NVE node, that a load balancing function is enabled.

5. A method in a Network Virtualization Edge, NVE, node in a network employing a Network Virtualization Overlay, NVO, where the NVE node implements Layer 2 and/or Layer 3 network virtualization functions for one or more tenant system elements, the method being **characterized by** comprising:
receiving (510) a load balancing, LB, enable message from a Network Virtualization Authority, NVA, node that provides reachability and forwarding information to the NVE node;
enabling a load balancing function, in response to the LB enable message; and
forwarding subsequent load balancing traffic to one or more virtual machines, VMs, using the enabled load balancing function.

6. The method of claim 5, further comprising sending (520) a confirmation message to the NVA node, in response to receiving the LB enable message.

7. The method of claim 5 or 6, further comprising:
receiving a load balancing, LB, disable message from the NVA node; and
disabling the load balancing function, in response to the LB disable message; and wherein, optionally,
the method further comprises sending confirmation, to the NVA node, that the load balancing function has been disabled.

8. The method of any of claims 5-7, wherein forwarding the subsequent load balancing traffic to one or more VMs comprises:
retrieving (530) an LB address from each of one or more incoming packets;
determining (540) a virtual network context for each of the one or more incoming packets, using the LB address;
obtaining (560) a VM MAC address for each of the one or more incoming packets, based on a load balancing algorithm and the virtual network context; and
forwarding (570) the one or more incoming packets according to the obtained VM MAC addresses.

9. The method of claim 8, wherein the NVE node supports Layer 3 service and wherein the LB address retrieved from each of the one or more incoming packets is an IP destination address.

10. The method of claim 8, wherein the NVE node supports Layer 2 service and wherein the LB address retrieved from each of the one or more incoming packets is a MAC destination address.

11. The method of any of claims 1-10, wherein the LB enable message comprises a Virtual Network (VN) identifier for a VN to which the load balancing traffic belongs.

12. The method of any of claims 1-11, wherein the LB enable message comprises one or more QoS requirements, one or more security policies, or one or more of both, and/or
wherein the LB enable message comprises an LB address to be used as a destination address for any incoming traffic to which load balancing shall be applied, and/or wherein the LB enable message comprises one or more addresses for VMs to which load balancing traffic should be forwarded, and/or
wherein the LB enable message identifies a load balancing algorithm to be applied to load balancing traffic.

13. A Network Virtualization Authority, NVA, node adapted to provide reachability and forwarding information to one or more Network Virtualization Edge, NVE, nodes in a network employing a Network Virtualization Overlay, NVO, wherein each NVE node implements Layer 2 and/or Layer 3 network virtualization functions for one or more tenant system elements, receive virtual machine, VM configuration information for one or more VMs, via a network interface circuit; the NVA node is **characterized in that** the NVA node is further adapted to configure at least a first NVE to enable load balancing, LB, by sending a LB enable message to the first NVE node via the network interface circuit; and
update configuration information for one or more remote NVEs to allow load balancing traffic for the one or more VMs to be sent to the first NVE node.

14. A Network Virtualization Edge, NVE, node adapted for use in a network employing a Network Virtualization Overlay, NVO, and further adapted to implement Layer 2 and/or Layer 3 network virtualization functions for one or more tenant system elements, **characterized in that** the NVE node is further adapted to:
receive, via a network interface circuit, a load balancing, LB, enable message from a Network Virtualization Authority, NVA, node that provides reachability and forwarding information to the NVE node;
enable a load balancing function, in response to the LB enable message; and
forward subsequent load balancing traffic to one or more virtual machines, VMs, using the enabled load balancing function.

15. A computer program, comprising instructions that, when executed on at least one processor, cause the at least one processor to carry out all the steps of the method of any one of claims 1-12; and wherein, optionally,
the carrier is one of an electronic signal, optical signal, radio signal, or computer-readable storage medium.

## Patentansprüche

1. Verfahren in einem Netzvirtualisierungsautorität-Knoten, NVA-Knoten, der Erreichbarkeits- und Weiterleitungsinformation einem oder mehreren Netzvirtualisierungsrand-Knoten, NVE-Knoten, in einem Netz bereitstellt, das ein Netzvirtualisierungsoverlay, NVO, einsetzt, worin jeder NVE-Knoten Netzvirtualisierungsfunktionen von Schicht 2 und/oder Schicht 3 für ein oder mehrere Mietersystemelemente implementiert, wobei das Verfahren Folgendes umfasst:
Empfangen (210) von virtuelle-Maschine-Konfigurationsinformation, VM-Konfigurationsinformation, für eine oder mehrere VMs;
und wobei das Verfahren **gekennzeichnet ist durch**:
Konfigurieren (220) mindestens eines ersten NVE zum Aktivieren von Lastausgleich, LB, **durch** Senden einer LB-Aktivierungsnachricht an den ersten NVE-Knoten; und
Aktualisieren (240) von Konfigurationsinformation für einen oder mehrere entfernte NVEs, um zu erlauben, dass Lastausgleichsverkehr für die eine oder die mehreren VMs an den ersten NVE-Knoten gesendet wird.

2. Verfahren nach Anspruch 1, worin das Verfahren außerdem umfasst, dass vom ersten NVE-Knoten eine Bestätigung empfangen (230) wird, dass eine Lastausgleichsfunktion aktiviert ist.

3. Verfahren nach Anspruch 1 oder 2, außerdem umfassend:
Bestimmen, dass LB im ersten NVE-Knoten deaktiviert sein sollte;
Senden (310, 410) einer LB-Deaktivierungsnachricht an den ersten NVE-Knoten; und
Aktualisieren (330, 450) von Konfigurationsinformation für einen oder mehrere entfernte NVEs, um zu verhindern, dass Lastausgleichsverkehr für die eine oder die mehreren VMs an den ersten NVE-Knoten gesendet wird; und optional
worin das Verfahren außerdem umfasst, dass vom ersten NVE-Knoten eine Bestätigung empfangen (320, 420) wird, dass die Lastausgleichsfunktion deaktiviert wurde.

4. Verfahren nach Anspruch 3, worin das Verfahren außerdem umfasst:
Konfigurieren (430) eines zweiten NVE-Knotens, um Lastausgleich, LB, zu aktivieren, indem eine LB-Aktivierungsnachricht an den zweiten NVE-Knoten gesendet wird; und
Aktualisieren (450) von Konfigurationsinformation für einen oder mehrere entfernte NVEs, um zu erlauben, dass Lastausgleichsverkehr für die eine oder die mehreren VMs an den zweiten NVE-Knoten gesendet wird; und worin optional
das Verfahren außerdem umfasst, dass vom zweiten NVE-Knoten eine Bestätigung empfangen (440) wird, dass eine Lastausgleichsfunktion aktiviert ist.

5. Verfahren in einem Netzvirtualisierungsrand-Knoten, NVE-Knoten, in einem Netz, das ein Netzvirtualisierungsoverlay, NVO, einsetzt, wo der NVE-Knoten Netzvirtualisierungsfunktionen von Schicht 2 und/oder Schicht 3 für ein oder mehrere Mietersystemelemente implementiert, wobei das Verfahren **dadurch gekennzeichnet ist, dass** es Folgendes umfasst:
Empfangen (510) einer Lastausgleich-Aktivierungsnachricht, LB-Aktivierungsnachricht, von einem Netzvirtualisierungsautorität-Knoten, NVA-Knoten, der dem NVE-Knoten Erreichbarkeits- und Weiterleitungsinformation bereitstellt;
Aktivieren einer Lastausgleichsfunktion als Antwort auf die LB-Aktivierungsnachricht; und
Weiterleiten von nachfolgendem Lastausgleichsverkehr an eine oder mehrere virtuelle Maschinen, VMs, unter Verwendung der aktivierten Lastausgleichsfunktion.

6. Verfahren nach Anspruch 5, außerdem umfassend, dass eine Bestätigungsnachricht an den NVA-Knoten gesendet (520) wird als Antwort auf den Empfang der LB-Aktivierungsnachricht.

7. Verfahren nach Anspruch 5 oder 6, außerdem umfassend:
Empfangen einer Lastausgleich-Deaktivierungsnachricht, LB-Deaktivierungsnachricht vom NVA-Knoten; und
Deaktivieren der Lastausgleichsfunktion als Antwort auf die LB-Deaktivierungsnachricht;
und worin das Verfahren optional außerdem umfasst, dass an den NVA-Knoten eine Bestätigung gesendet wird, dass die Lastausgleichsfunktion deaktiviert wurde.

8. Verfahren nach einem der Ansprüche 5-7, worin das Weiterleiten des nachfolgenden Lastausgleichsverkehrs an eine oder mehrere VMs Folgendes umfasst:
Abrufen (530) einer LB-Adresse aus jedem von einem oder mehreren eingehenden Paketen;
Bestimmen (540) eines virtuellen Netzkontexts für jedes des einen oder der mehreren eingehenden Pakete unter Verwendung der LB-Adresse;
Ermitteln (560) einer VM-MAC-Adresse für jedes des einen oder der mehreren eingehenden Pakete auf der Basis eines Lastausgleichsalgorithmus und des virtuellen Netzkontexts; und
Weiterleiten (570) des einen oder der mehreren eingehenden Pakete gemäß den ermittelten VM-MAC-Adressen.

9. Verfahren nach Anspruch 8, worin der NVE-Knoten Schicht-3-Dienst unterstützt und worin die LB-Adresse, die von jedem des einen oder der mehreren eingehenden Pakete ermittelt wird, eine IP-Zieladresse ist.

10. Verfahren nach Anspruch 8, worin der NVE-Knoten Schicht-2-Dienst unterstützt und worin die LB-Adresse, die von jedem des einen oder der mehreren eingehenden Pakete ermittelt wird, eine MAC-Zieladresse ist.

11. Verfahren nach einem der Ansprüche 1-10, worin die LB-Aktivierungsnachricht einen virtuelles-Netz-Identifikator, VN-Identifikator, für ein VN umfasst, zu dem der Lastausgleichsverkehr gehört.

12. Verfahren nach einem der Ansprüche 1-11, worin die LB-Aktivierungsnachricht eine oder mehrere QoS-Anforderungen, eine oder mehrere Sicherheits-Policies oder eine oder mehrere von beiden umfasst, und/oder
worin die LB-Aktivierungsnachricht eine LB-Adresse umfasst, die als eine Zieladresse für jeglichen eingehenden Verkehr zu verwenden ist, auf den Lastausgleich anzuwenden ist, und/oder
worin die LB-Aktivierungsnachricht eine oder mehrere Adressen für VMs umfasst, an die Lastausgleichsverkehr weitergeleitet werden sollte, und/oder
worin die LB-Aktivierungsnachricht einen Lastausgleichsalgorithmus identifiziert, der auf den Lastausgleichsverkehr anzuwenden ist.

13. Netzvirtualisierungsautorität-Knoten, NVA-Knoten, dazu angepasst, Erreichbarkeits- und Weiterleitungsinformation einem oder mehreren Netzvirtualisierungsrand-Knoten, NVE-Knoten, in einem Netz bereitzustellen, das ein Netzvirtualisierungsoverlay, NVO, einsetzt, worin jeder NVE-Knoten Netzvirtualisierungsfunktionen von Schicht 2 und/oder Schicht 3 für ein oder mehrere Mietersystemelemente implementiert,
Empfangen von virtuelle-Maschine-Konfigurationsinformation, VM-Konfigurationsinformation, für eine oder mehrere VMs über eine Netzschnittstellenschaltung;
wobei der NVA-Knoten **dadurch gekennzeichnet ist, dass** der NVA-Knoten außerdem dazu angepasst ist, mindestens einen ersten NVE zu konfigurieren, um Lastausgleich, LB, zu aktivieren durch Senden einer LB-Aktivierungsnachricht über die Netzschnittstellenschaltung an den ersten NVE-Knoten; und
Aktualisieren von Konfigurationsinformation für einen oder mehrere entfernte NVEs, um zu erlauben, dass Lastausgleichsverkehr für die eine oder die mehreren VMs an den ersten NVE-Knoten gesendet wird.

14. Netzvirtualisierungsrand-Knoten, NVE-Knoten, angepasst zur Verwendung in einem Netz, das ein Netzvirtualisierungsoverlay, NVO, einsetzt, und außerdem dazu angepasst ist, Netzvirtualisierungsfunktionen von Schicht 2 und/oder Schicht 3 für ein oder mehrere Mietersystemelemente zu implementieren, **dadurch gekennzeichnet, dass** der NVE-Knoten außerdem angepasst ist zum:
Empfangen einer Lastausgleich-Aktivierungsnachricht, LB-Aktivierungsnachricht, über eine Netzschnittstellenschaltung von einem Netzvirtualisierungsautorität-Knoten, NVA-Knoten, der dem NVE-Knoten Erreichbarkeits- und Weiterleitungsinformation bereitstellt;
Aktivieren einer Lastausgleichsfunktion als Antwort auf die LB-Aktivierungsnachricht; und
Weiterleiten von nachfolgendem Lastausgleichsverkehr an eine oder mehrere virtuelle Maschinen, VMs, unter Verwendung der aktivierten Lastausgleichsfunktion.

15. Computerprogramm, Anweisungen umfassend, die, wenn sie auf mindestens einem Prozessor ausgeführt werden, den mindestens einen Prozessor veranlassen, alle Schritte des Verfahrens nach einem der Ansprüche 1-12 auszuführen; und worin optional
der Träger eins von Folgenden ist: ein elektronisches Signal, ein optisches Signal, ein Funksignal oder ein computerlesbares Speichermedium.

## Revendications

1. Procédé dans noeud de Network Virtualization Authority, NVA, qui fournit des informations de joignabilité et de transfert à un ou plusieurs noeuds de Network Virtualization Edge, NVE, dans un réseau employant une Network Virtualization Overlay, NVO, chaque noeud NVE implémentant des fonctions de virtualisation de réseau de couche 2 et/ou de couche 3 pour un ou plusieurs éléments de systèmes locataires, ce procédé comprenant :
la réception (210) d'informations de configuration de machine virtuelle, VM, pour une ou plusieurs VM ;
et le procédé étant **caractérisé par** :
la configuration (220) d'au moins un premier NVE pour permettre l'équilibre des charges, LB, en envoyant un message d'activation LB au premier noeud NVE ; et
la mise à jour (240) d'informations de configuration pour un ou plusieurs NVE distants pour permettre un trafic d'équilibrage de charge pour l'une ou plusieurs VM à envoyer au premier noeud NVE.

2. Procédé selon la revendication 1, dans lequel le procédé comprend en outre la réception (230) d'une confirmation en provenance du premier noeud NVE, qu'une fonction d'équilibrage de charges est activée.

3. Procédé selon la revendication 1 ou 2, comprenant en outre :
la détermination que LB doit être désactivé pour le premier noeud NVE ;
l'envoi (310, 410) d'un message de désactivation LB au premier noeud NVE ; et
la mise à jour (330, 450) d'informations de configuration pour un ou plusieurs NVE distants afin d'empêcher un trafic d'équilibrage de charge pour l'une ou plusieurs VM d'être envoyé au premier noeud NVE ; et dans lequel, en option
le procédé comprend en outre la réception (320, 420) d'une confirmation, en provenance du premier noeud NVE, que la fonction d'équilibrage des charges a été désactivée.

4. Procédé selon la revendication 3, dans lequel le procédé comprend en outre :
la configuration (430) d'un deuxième noeud NVE pour permettre un équilibrage des charges, LB, en envoyant un message d'activation LB au deuxième noeud NVE ; et
la mise à jour (450) d'informations de configuration pour un ou plusieurs NVE distants afin de permettre un trafic d'équilibrage des charges pour l'une ou plusieurs VM d'être envoyés au deuxième noeud NVE ; et dans lequel, en option,
le procédé comprend en outre la réception (440) d'une confirmation, en provenance du deuxième noeud NVE, qu'une fonction d'équilibrage de charges est activée.

5. Procédé dans un noeud de Network Virtualization Edge, NVE, dans un réseau employant une Network Virtualization Overlay, NVO, le noeud NVE implémentant des fonctions de virtualisation de réseau de couche 2 et/ou de couche 3 pour un ou plusieurs éléments de systèmes locataires, le procédé étant **caractérisé en ce qu'**il comprend :
la réception (510) d'un message d'activation d'équilibrage des charges, LB, en provenance d'un noeud de Network Vitualization Authority, NVA, qui fournit des informations de joignabilité et de transfert d'informations au noeud NVE ;
l'activation d'une fonction d'équilibrage de charges en réponse au message d'activation LB ; et
le transfert d'un trafic d'équilibrage de charges suivant à une ou plus machines virtuelles, VM, à l'aide de la fonction d'équilibrage des charges activée.

6. Procédé selon la revendication 5, comprenant en outre l'envoi (520) d'un message de confirmation au noeud NVA en réponse à la réception du message d'activation LB.

7. Procédé selon la revendication 5 ou 6, comprenant en outre :
la réception d'un message de désactivation d'équilibrage des charges, LB, en provenance du noeud NVA ; et
la désactivation de la fonction d'équilibrage des charges, en réponse au message de désactivation LB ;
et dans lequel, en option, le procédé comprend en outre l'envoi d'une confirmation, au noeud NVA, que la fonction d'équilibrage des charges a été désactivée.

8. Procédé selon l'une quelconque des revendications 5 à 7, dans lequel le transfert du trafic d'équilibrage des charges suivant à une ou plusieurs VM comprend :
la récupération (530) d'une adresse LB à partir de chacun des un ou plusieurs paquets entrants ;
la détermination (540) d'une contexte de réseau virtuel pour chacun des un ou plusieurs paquets entrants, à l'aide de l'adresse LB ;
l'obtention (560) d'une adresse MAC de VM pour chacun des un ou plusieurs paquets entrants, sur la base d'un algorithme d'équilibrage des charges et du contexte de réseau virtuel ; et
le transfert (570) de l'un ou plusieurs paquets entrants selon les adresses MAC de VM obtenues.

9. Procédé selon la revendication 8, dans lequel le noeud NVE supporte un service de couche 3 et dans lequel l'adresse LB récupérée à partir de chacun des un ou plusieurs paquets entrants est une adresse de destination IP.

10. Procédé selon la revendication 8, dans lequel le noeud NVE supporte un service de couche 2 et dans lequel l'adresse LB récupérée à partir de chacun des un ou plusieurs paquets entrants est une adresse de destination MAC.

11. Procédé selon l'une quelconque des revendications 1 à 10, dans lequel le message d'activation LB comprend un identifiant de Virtual Network (VN) pour un VN auquel le trafic d'équilibrage de charges appartient.

12. Procédé selon l'une quelconque des revendications 1 à 11, dans lequel le message d'activation LB comprend une ou plusieurs exigences QoS, une ou plusieurs politiques de sécurité et une ou plusieurs des deux et/ou
dans lequel le message d'activation LB comprend une adresse LB à utiliser en tant qu'adresse de destination pour tout trafic entrant auquel l'équilibrage de charges doit être appliqué et/ou
dans lequel le message d'activation LB comprend une ou plusieurs adresses pour des VM auxquelles le trafic d'équilibrage de charges doit être transféré et/ou
dans lequel le message d'activation LB identifie un algorithme d'équilibrage de charges à appliquer au trafic d'équilibrage de charges.

13. Noeud de Network Virtualization Authority, NVA, conçu pour fournir des informations de joignabilité et de transfert à un ou plusieurs noeuds de Network Virtualization Edge, NVE dans un réseau employant une Network Virtualization Overlay, NVO, chaque noeud NVE implémentant des fonctions de virtualisation de réseau de couche 2 et/ou de couche 3 pour un ou plusieurs éléments de systèmes locataires,
recevoir des informations de configuration de machine virtuelle, VM, pour une ou plusieurs VM, via un circuit d'interface de réseau ;
le noeud NVA étant **caractérisé en ce que** le noeud NVA est en outre conçu pour configurer au moins un premier NVE pour permettre un équilibrage des charges, LB, en voyant un message d'activation LB au premier noeud NVE via le circuit d'interface de réseau ; et
mettre à jour des informations de configuration pour un ou plusieurs NVE distants afin de permettre à un trafic d'équilibrage des charges pour l'une ou plusieurs VM d'être envoyé au premier noeud NVE.

14. Noeud de Network Virtualization Edge, NVE, conçu pour être utilisé dans un réseau employant une Network Virtualization Overlay, NVO, et en outre conçu pour implémenter des fonctions de virtualisation de réseau de couche 2 et/ou de couche 3 pour un ou plusieurs éléments de systèmes locataires, **caractérisé en ce que** le noeud NVE est en outre conçu pour :
recevoir, via un circuit d'interface de réseau, un message d'activation d'équilibrage de charges, LB, en provenance d'un noeud de Network Virtualization Authority, NVA, qui fournit des informations de joignabilité et de transfert au noeud NVE;
activer une fonction d'équilibrage des charges en réponse au message d'activation LB ; et
transférer un trafic d'équilibrage de charges suivant à une ou plusieurs machines virtuelles, VM, à l'aide de la fonction d'équilibrage de charges activée.

15. Programme informatique, comprenant des instructions qui, lorsqu'elles sont exécutées sur au moins un processeur, font en sorte que l'au moins un processeur exécute toutes les étapes du procédé selon l'une quelconque des revendications 1 à 12 ; et dans lequel, en option,
le support est l'un parmi un signal électronique, un signal optique, un signal radio ou un support de stockage lisible par un ordinateur.
